# EUROPÄISCHE PATENTSCHRIFT

(11) **EP 1 755 930 B1**
(45) Veröffentlichungstag und Bekanntmachung des Hinweises auf die Patenterteilung: **06.02.2008**
(21) Anmeldenummer: 05740201.8
(22) Anmeldetag: 28.04.2005
(51) Int. Cl.: B60S 1/16, H02K 5/22, H02K 7/116, B60S 1/08

(54) **DECKEL FÜR EIN GETRIEBEGEHÄUSE EINER SCHEIBENWISCHERANLAGE**
COVER FOR THE DRIVE HOUSING OF A WINDSCREEN WIPER SYSTEM
COUVERCLE POUR LOGEMENT DE MECANISME D'ENTRAINEMENT D'UN SYSTEME D'ESSUIE-GLACE

(30) Priorität: 04.06.2004 DE 102004027504
(43) Veröffentlichungstag der Anmeldung: 28.02.2007
(73) Patentinhaber: ROBERT BOSCH GMBH, 70442 Stuttgart (DE)
(72) Erfinder: FLEISCHER, Claus, 77815 Buehl (DE); HAWIGHORST, Achim, 77830 Buehlertal (DE)
(86) Internationale Anmeldenummer: PCT/EP2005/051939
(87) Internationale Veröffentlichungsnummer: WO 2005/118361

(56) Entgegenhaltungen:
- DE-A1- 3 812 996
- US-A- 4 792 307

## Beschreibung

### Stand der Technik

Die Erfindung betrifft einen Deckel für ein Getriebegehäuse einer Scheibenwischeranlage, bestehend aus einer metallischen Grundplatte und in Kunststoff eingelagerten Leiterbahnen, die von einem an der Außenseite des Deckels angeordneten Stecker durch eine in der Grundplatte vorgesehene Öffnung hindurch zur Unterseite des Deckels geführt sind.

Ein derartiger, in Antriebsaggregaten für Scheibenwischeranlagen eingesetzter, Getriebedeckel ist bereits aus der DE 3 812 996 A1 und aus der DE 195 48 823 A1 bekannt.

Das Antriebsaggregat besteht üblicherweise aus einem Elektromotor, der ein Schneckenradgetriebe antreibt. Das Getriebe ist in einem topfförmigen Getriebegehäuse untergebracht, an das seitlich der Elektromotor anschließt. Im Getriebegehäuse liegt das Schneckenrad, wobei die Abtriebsachse durch den Boden des Gehäuses nach außen geführt ist. Das Schneckenrad wird von einer Schnecke angetrieben, die in der Verlängerung der Motorwelle ausgebildet ist. Die Stromversorgung des Elektromotors erfolgt über einen außen am Deckel vorgesehenen Stecker, von dem aus Leiterbahnen durch eine Öffnung des Deckels hindurch ins Innere des Getriebegehäuses geführt sind. Weitere durch den Stecker anschließbare Leiterbahnen können etwa zur Bereitstellung von Kontrollsignalen, beispielsweise mittels eines so genannten Parkstellungsschalters, vorgesehen sein.

Bei dem aus der DE 195 48 823 A1 bekannten Getriebedeckel sind die Leiterbahnen in eine Kunststoffschicht eingebettet, die an die metallische Grundplatte, insbesondere an deren Außenseite, angespritzt wird und die in der Regel über einen Abschnitt verfügt, der als Stecker ausgebildet ist. Die metallische Grundplatte weist Öffnungen auf, deren Ränder von der Kunststoffschicht umgriffen sind, wobei die Leiterbahnen durch diese Öffnungen zur Unterseite des Deckels geführt sind. Um den bekannten Getriebedeckel korrosionsfest und mechanisch stabil auszuführen, ist es erforderlich, relativ ausgedehnte Bereiche auf der Außenseite, am Rand und an der Unterseite der Grundplatte mit Kunststoffflächen zu versehen.

Gegenwärtig werden vielfach Getriebedeckel, die ohne metallische Grundplatte, also ganz aus Kunststoff, gefertigt sind, eingesetzt. Abgesehen davon, das etwaige Störstrahlungen unerwünschterweise durch solche Kunststoff-Getriebedeckel abgestrahlt werden können, sind derartige Kunststoffteile mit hohem Integrationsgrad und kundenspezifischer Bauform insbesondere von den Spritzwerkzeugkosten her sehr aufwändig. Bereits die zur Befestigung des Kunststoffdeckels am Getriebegehäuse typischerweise vorgesehenen Rasthaken sind spritztechnisch (Position, Form, Temperatur usw.) relativ aufwändig herzustellen. Besonders problematisch ist jedoch, ähnlich wie bei den oben erwähnten großflächigen Umspritzungen einer metallischen Grundplatte, die Fixierung der Leiterbahnen (Einleger) beim Spritzgießen. Dies erfordert insbesondere eine aufwändige Rückzugstechnik. Um aufwändiges Umspritzen der Leiterbahnen zu vermeiden, wurde deshalb in der US 5, 864, 188 vorgeschlagen, die Leiterbahnen ohne Umspritzung zwischen einer Fläche des Kunststoff-Getriebedeckels und einem zusätzlichen, an der Fläche zu befestigenden Deckelteil einzufügen.

Es ist daher Aufgabe der Erfindung, den Deckel so auszubilden, dass er guten Korrosionsschutz mit einfacher, insbesondere kostengünstiger Herstellbarkeit verbindet.

Diese Aufgabe wird erfindungsgemäß durch einen Getriebedeckel gemäß Anspruch 1 gelöst. Vorteilhafte Ausführungen sind in den Unteransprüchen gekennzeichnet.

Für den erfindungsgemäßen Getriebedeckel mit durch eine Öffnung in einer metallischen Grundplatte geführten Leiterbahnen ist ein zuvor separat gefertigtes Kunststoffteil mit eingelagerten Leiterbahnen vorgesehen, das einen als Stecker ausgebildeten Kopfbereich und einen flächig verbreiterten Fußbereich aufweist und das von der Unterseite des Deckels her so durch die passend gestaltete Öffnung geführt ist, dass die flächigen Bereiche des Fußbereichs die Öffnung hintergreifen und an der Unterseite des Deckels anliegen. Das relativ kleine und wenig komplexe Kunststoffteil ist spritztechnisch einfach und kostensparend herzustellen, so dass der Deckel insgesamt kostengünstig herstellbar ist.

Gemäß einer Ausführungsform der Erfindung ist es von Vorteil, wenn das Kunststoffteil einen den Kopf- mit dem Fußbereich einstückig verbindenden Mittelbereich aufweist, der sich durch die Öffnung der Grundplatte hindurch erstreckt und in dem die Leiterbahnen annähernd senkrecht zur Grundplatte geführt sind. Dadurch ergibt sich eine einfache, jedoch vielfach variabel Bauform mit großem Spielraum für die Anordnung bzw. Konfiguration der Leiterbahnen.

Gemäß einer ersten Variante dieser Ausführungsform ist es dabei vorteilhaft, dass anschließend an den Mittelbereich mindestens eine der Leiterbahnen senkrecht zur Grundplatte durch den Fußbereich des Kunststoffteils weitergeführt und unterhalb der Öffnung der Grundplatte aus dem Fußbereich des Kunststoffteils herausgeführt ist.

Gemäß einer zweiten Variante, die auch mit der ersten Variante kombiniert werden kann, ist es möglich, dass anschließend an den Mittelbereich mindestens eine der Leiterbahnen parallel zur Grundplatte im Fußbereich des Kunststoffteils weitergeführt und anschließend, versetzt zur Öffnung, senkrecht aus dem Fußbereich herausgeführt ist.

Generell ist es vorteilhaft, dass der Fußbereich des Kunststoffteils einen plattenförmig ausgebildeten Bereich aufweist, dessen Oberseite dadurch an der Unterseite des Deckels gut dichtend anliegt.

Dabei ist es weiterhin von Vorteil, dass an der Unterseite des plattenförmig ausgebildeten Bereichs des Fußbereichs des Kunststoffteils elektrische Bauelemente vorgesehen sind, die untereinander und mit mindestens einer aus dem Fußbereich herausgeführten Leiterbahn in elektrischer Verbindung stehen. In diesem Zusammenhang ist es vorteilhaft, an der Unterseite des plattenförmigen Fußbereichs ein flaches Metallgitter zur Verbindung der elektrischen Bauelemente untereinander und mit den herausgeführten Leiterbahnen vorzusehen.

Bei allen Varianten können zusätzlich Mittel zur dichtenden Befestigung des Kunststoffteils an der Grundplatte vorgesehen sein.

Ausführungsbeispiele der Erfindung sind in den Zeichnungen dargestellt und in der nachfolgenden Beschreibung näher erläutert. Es zeigen
Figur 1 einen seitlichen Schnitt durch ein Getriebegehäuse mit aufmontiertem erfindungsgemäßen Getriebedeckel,
Figur 2 eine Draufsicht auf den Getriebedeckel gemäß Figur 1,
Figur 3 einen seitlichen Schnitt durch ein erstes Ausführungsbeispiel für das am erfindungsgemäßen Getriebedeckel vorgesehene Kunststoffteil,
Figur 4 ein zweites Ausführungsbeispiel in der Darstellung gemäß Figur 3.

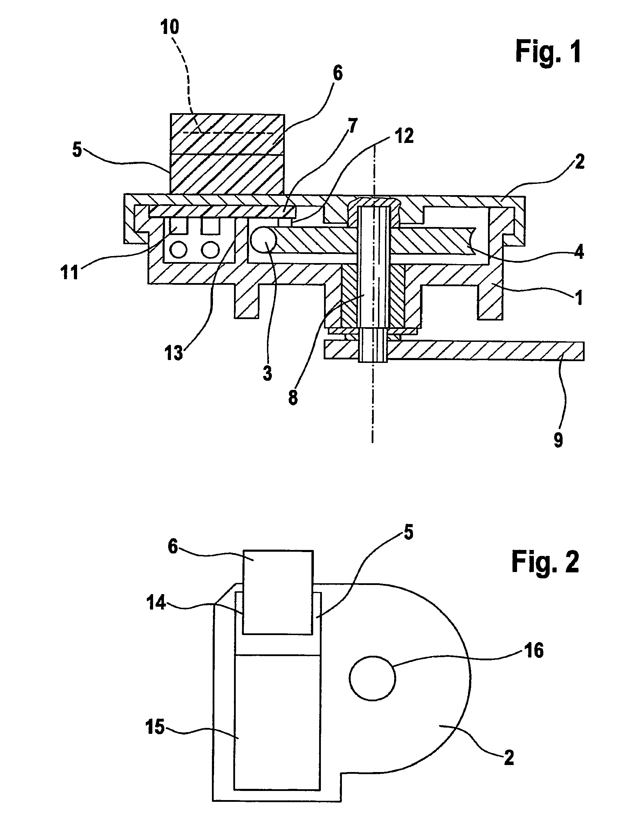

In Figur 1 ist ein Getriebegehäuse im Schnitt dargestellt, das aus einem Gehäusetopf 1 und einem erfindungsgemäßen Getriebedeckel besteht. Seitlich an den Gehäusetopf 1 ist ein hier nicht dargestellter Motor angeflanscht, dessen Motorwelle 3 an ihrem Ende eine Schnecke trägt, die das im Getriebegehäuse angeordnete Schneckenrad 4 antreibt. Der Getriebedeckel besteht erfindungsgemäß aus einer metallischen Grundplatte 2 und einem vorgefertigten Kunststoffteil 5, dessen Kopfbereich 6 als Stecker und dessen Fußbereich 7 flächig verbreitert ausgebildet ist, so dass der Fußbereich 7 in der dargestellten Weise an der Unterseite der Grundplatte 2 dichtend anliegen kann. Eine Abdichtung ist erforderlich, um ein geschlossenes, korrosionsfestes Getriebegehäuse zu erhalten. Das Schneckenrad 4 ist fest mit einer Abtriebswelle 8 verbunden, die durch den Boden des Gehäusetopfes 1 geführt ist. In vielen Fällen umfasst das Wischergetriebe ein hier nicht gezeigtes Umsetzgetriebe, das die Drehbewegung des Schneckenrads 4 in eine pendelnde Bewegung der mit dem Wischerarm verbundenen Kurbel 9 umsetzt. Die Abtriebswelle 8 kann sich an einem Lager an der Unterseite der metallischen Grundplatte 2 abstützen.

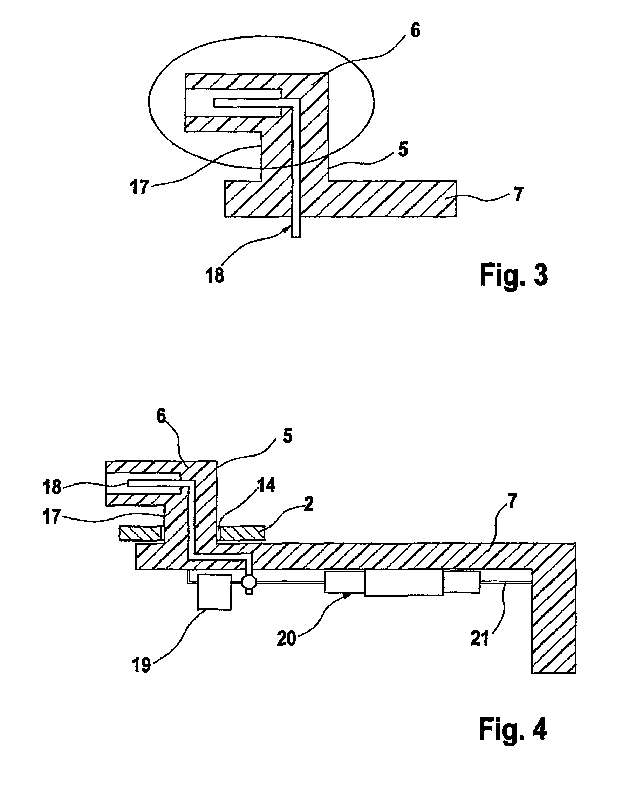

Wie aus Figur 1 weiter zu erkennen ist, weist der Stecker 6 beispielsweise fünf Kontakte 10 auf, die mit entsprechenden Leiterbahnen (vgl. Figur 3 und 4) verbunden sind, die im Kunststoffteil 5 eingebettet sind und sich bis zur Unterseite des Fußbereichs 7 erstrecken, aus dem sie in den Innenraum des Getriebegehäuses hineinragen. Die gehäuseseitigen Enden der Leiterbahnen können je nach Funktion in verschiedener Weise ausgebildet und angeordnet sein. Zum Beispiel können der Stromversorgung des angeflanschten Elektromotors dienende, in Figur 1 nur schematisch angedeutete Steckkontakte 11, sowie Kontaktfahnen 12 vorgesehen sein, wobei letztere im Zusammenwirken mit auf der Oberseite des Schneckenrads 4 angeordneten konzentrischen Kontaktbahnen einen Parkstellungsschalter bilden können. Die Befestigung des Getriebedeckels am Gehäusetopf 1 ist vielfältig realisierbar, beispielsweise durch das dargestellte Aufclipsen bzw. Umbiegen des Getriebedeckelblechs 2 auf den Rand des Getriebetopfs 1. Auch die dichtende Befestigung des Kunststoffteils 5 in der Öffnung der Grundplatte 2 kann auf unterschiedliche Arten erfolgen, etwa durch eine Presspassung oder durch Rastmittel. Die dichtende Befestigung kann gegebenenfalls, wie in Figur 1 dargestellt, durch Abstützen des Fußbereichs 7 auf einer Rippe 13 im Innenraum des Getriebegehäuses unterstützt werden. Die Gestaltung des erfindungsgemäßen Getriebedeckels ist nicht an die in Figur 1 dargestellte Konfiguration gebunden. Insbesondere kann das Schneckenrad 4 im Wesentlichen den gesamten inneren Durchmesser des Getriebetopfs 1 einnehmen, oder es können für den Parkstellungsschalter weitere horizontal und/oder vertikal angeordnete und gegebenenfalls bewegliche Baukomponenten im Gehäusetopf 1 vorgesehen sein.

Figur 2 zeigt, stark schematisiert, eine Draufsicht auf den erfindungsgemäßen Getriebedeckel mit der Grundplatte 2, der darin vorgesehenen Öffnung 14 und dem Kunststoffteil 5 mit dem als Stecker ausgebildeten Kopfbereich 6. Die Öffnung 14 besitzt eine Form und Größe, die es erlaubt, das vorgefertigte Kunststoffteil 5 zur Fertigstellung des Getriebedeckels von der Unterseite der Grundplatte her, also mindestens mit seinem Kopfbereich 6, durch die Grundplatte 2 hindurch zu führen, so dass sich der Stecker danach an der Außenseite des Getriebedeckels befindet. In Figur 2 ist außerdem zur Verdeutlichung ein Variationsbereich 15 gezeigt, der den Bereich anderer, alternativ möglicher Positionen der Öffnung 14 auf dem Getriebedeckel andeutet. Je nach Kundenwunsch kann der Stecker auf diese Weise flexibel angeordnet bzw. räumlich ausgerichtet werden. Der erfindungsgemäße Getriebedeckel besteht im Wesentlichen aus Metall und kann demgemäß bezüglich seiner Außenkontur als kostengünstiges Stanzteil hergestellt werden, das ohne weiteres noch, beispielsweise für ein Lager 16 für die in Figur 1 gezeigte Abtriebswelle 8, tiefgezogen oder, für höhere Festigkeit, verprägt werden kann. Die Öffnung 14 für das Stecker-Kunststoffteil 5 kann durch einen Stempel erzeugt und somit auf einfache Weise in Position und Form variiert werden.

Figur 3 zeigt das separate, noch nicht in die Grundplatte 2 montierte Kunststoffteil 5, das einen als Stecker ausgebildeten Kopfbereich 6 und einen flächig verbreiterten Fußbereich 7 aufweist, die durch einen annähernd senkrecht zur Grundplatte 2 angeordneten Mittelbereich 17 einstückig verbunden sind. Erkennbar ist ferner eine Leiterbahn 18, deren gehäuseseitiges Ende annähernd senkrecht aus der Unterseite des Fußbereichs 7 herausragt, während ihr anderes Ende in den Stecker bzw. Kopfbereich 6 integriert ist. Der Fußbereich 7 kann eine Höhe von nur wenigen Millimetern aufweisen, so dass im Innenraum des Getriebegehäuses kein nennenswerter Bauraum beansprucht wird. Der Fußbereich 7 ist, wie in Figur 3 dargestellt, vorteilhaft plattenförmig ausgebildet, so dass seine Oberseite, die Öffnung 14 hintergreifend, an der Unterseite der Grundplatte 2 eng und abdichtend anliegen kann.

Figur 4 zeigt eine weitere,Ausführungsform des Kunststoffteils 5, bei der der Fußbereich 7 eine größere laterale Ausdehnung aufweist, so dass sich die Möglichkeit eröffnet, an seiner Unterseite elektrische Bauelemente, beispielsweise eine Spule 19 und/oder einen im Getriebegehäuse integrierten Bürstenhalter 20 anzuordnen. Außerdem kann dadurch die Leiterbahn 18 versetzt gegenüber der Position der Öffnung 14 in der Grundplatte 2 aus dem Fußbereich 7 herausgeführt werden. Selbstverständlich sind Abwandlungen, bei denen ein Teil der Leiterbahnen 18 unterhalb der Öffnung 14 der in Figur 4 angedeuteten Grundplatte 2 und ein anderer Teil der Leiterbahnen 18 versetzt aus dem Fußbereich 7 herausgeführt sind, möglich und ohne weiteres realisierbar. Auf der Unterseite des Fußbereich 7 kann im übrigen beispielsweise ein Stanzgitter 21 aufgebracht werden, um die elektrische Verbindung zwischen den Bauelementen 19 und 20 sowie der Leiterbahn 18 herzustellen.

Allen Ausführungsformen der Erfindung gemeinsam ist das im Vergleich zum Getriebedeckel bzw. zu bisherigen KunststoffUmspritzungen oder Kunststoffdeckeln kleine und weniger komplexe Kunststoffteil 5. Damit entfallen nicht nur aufwändige Laschen, Rasthaken etc., sondern vor allem können die Leiterbahnen 18 leichter in Kunststoff eingebettet werden, da nur noch eine relativ kleinvolumige Umspritzung stattfindet, wodurch insbesondere eine aufwändige Spritzwerkzeug-Rückzugstechnik entfällt.

## Patentansprüche

1. Deckel für ein Getriebegehäuse einer Scheibenwischeranlage, bestehend aus einer metallischen Grundplatte (2) und in Kunststoff eingelagerten Leiterbahnen (18), die von einem an der Außenseite des Deckels angeordneten Stecker durch eine in der Grundplatte (2) vorgesehene Öffnung (14) hindurch zur Unterseite des Deckels geführt sind,
**dadurch gekennzeichnet,**
**dass** ein Kunststoffteil (5) mit eingelagerten Leiterbahnen (18) vorgesehen ist, das einen als Stecker ausgebildeten Kopfbereich (6) und einen flächig verbreiterten Fußbereich (7) aufweist und das von der Unterseite des Deckels her so durch die passend gestaltete Öffnung (14) geführt ist, dass die flächigen Bereiche des Fußbereichs (7) die Öffnung (14) hintergreifen und an der Unterseite des Deckels anliegen.

2. Deckel nach Anspruch 1, **dadurch gekennzeichnet, dass** das Kunststoffteil (5) einen den Kopf (6)- mit dem Fußbereich (7) einstückig verbindenden Mittelbereich (17) aufweist, der sich durch die Öffnung (14) der Grundplatte (2) hindurch erstreckt und in dem die Leiterbahnen (18) annähernd senkrecht zur Grundplatte (2) geführt sind.

3. Deckel nach Anspruch 2, **dadurch gekennzeichnet, dass** anschließend an den Mittelbereich (17) mindestens eine der Leiterbahnen (18) senkrecht zur Grundplatte (2) durch den Fußbereich (7) des Kunststoffteils (5) weitergeführt und unterhalb der Öffnung (14) der Grundplatte (2) aus dem Fußbereich (7) des Kunststoffteils (5) herausgeführt ist.

4. Deckel nach Anspruch 2, **dadurch gekennzeichnet, dass** anschließend an den Mittelbereich (17) mindestens eine der Leiterbahnen (18) parallel zur Grundplatte (2) im Fußbereich (7) des Kunststoffteils (5) weitergeführt und anschließend, versetzt zur Öffnung(14), senkrecht aus dem Fußbereich (7) herausgeführt ist.

5. Deckel nach einem der Ansprüche 1 bis 4, **dadurch gekennzeichnet, dass** der Fußbereich (7) des Kunststoffteils (5) einen plattenförmig ausgebildeten Bereich aufweist, dessen Oberseite an der Unterseite des Deckels anliegt.

6. Deckel nach Anspruch 5, **dadurch gekennzeichnet, dass** an der Unterseite des plattenförmig ausgebildeten Bereichs des Fußbereichs (7) des Kunststoffteils (5) elektrische Bauelemente (19, 20) vorgesehen sind, die untereinander und mit mindestens einer aus dem Fußbereich (7) herausgeführten Leiterbahn (18) in elektrischer Verbindung stehen.

7. Deckel nach Anspruch 6, **dadurch gekennzeichnet, dass** an der Unterseite des plattenförmig ausgebildeten Bereichs des Fußbereichs (7) des Kunststoffteils (5) ein flaches Metallgitter (21) zur Verbindung der elektrischen Bauelemente (19, 20) untereinander und mit den herausgeführten Leiterbahnen (18) vorgesehen ist.

8. Deckel nach einem der Ansprüche 1 bis 7, **dadurch gekennzeichnet, dass** Mittel (13) zur dichtenden Befestigung des Kunststoffteils (5) an der Grundplatte (2) vorgesehen sind.

## Claims

1. Cover for a drive housing of a windscreen wiper system, comprising a metallic base plate (2) and conductor tracks (18) which are embedded in plastic and are guided from a plug, which is arranged on the outside of the cover, through an opening (14), which is provided in the base plate (2), to the lower side of the cover, **characterized in that** a plastic part (5) with embedded conductor tracks (18) is provided, said plastic part having a head region (6) designed as plug and a foot region (7) widened in a planar manner, and said plastic part being guided from the lower side of the cover through the correspondingly configured opening (14) in such a manner that the planar regions of the foot region (7) engage behind the opening (14) and bear against the lower side of the cover.

2. Cover according to Claim 1, **characterized in that** the plastic part (5) has a central region (17) which connects the head region (6) to the foot region (7) as a single part, extends through the opening (14) of the base plate (2) and in which the conductor tracks (18) are guided approximately perpendicularly to the base plate (2).

3. Cover according to Claim 2, **characterized in that**, adjoining the central region (17), at least one of the conductor tracks (18) is guided on perpendicular to the base plate (2) through the foot region (7) of the plastic part (5) and is guided out of the foot region (7) of the plastic part (5) below the opening (14) of the base plate (2).

4. Cover according to Claim 2, **characterized in that**, adjoining the central region (17), at least one of the conductor tracks (18) is guided on parallel to the base plate (2) in the foot region (7) of the plastic part (5) and is subsequently guided perpendicularly out of the foot region (7) in a manner offset with respect to the opening (14).

5. Cover according to one of Claims 1 to 4, **characterized in that** the foot region (7) of the plastic part (5) has a region which is of plate-like design and the upper side of which bears against the lower side of the cover.

6. Cover according to Claim 5, **characterized in that** electric components (19, 20) are provided on the lower side of the region, which is of plate-like design, of the foot region (7) of the plastic part (5), said components being electrically connected to each other and to at least one conductor track (18) guided out of the foot region (7).

7. Cover according to Claim 6, **characterized in that** a flat metal lattice (21) for connecting the electric components (19, 20) to each other and to the conductor tracks (18) which are guided out is provided on the lower side of the region, which is of plate-like design, of the foot region (7) of the plastic part (5).

8. Cover according to one of Claims 1 to 7, **characterized in that** means (13) for the sealing fastening of the plastic part (5) to the base plate (2) are provided.

## Revendications

1. Couvercle de boîtier de transmission d'installation d'essuie-glace composé d'une plaque de base (2), métallique et de chemins conducteurs (18) intégrés dans de la matière plastique, qui, partant d'un connecteur installé sur le côté extérieur du couvercle, traverse une ouverture (14) dans la plaque de base (2) pour rejoindre la face inférieure du couvercle,
**caractérisé par**
une pièce en matière plastique (5) avec des chemins conducteurs (18), intégrés, cette pièce ayant une région de tête (6) en forme de connecteur et une région de pied (7), étalée en surface et cette pièce est introduite par la face inférieure du couvercle dans l'ouverture (14) de forme adaptée, de façon que les zones en surface de la région de pied (7) vienne prendre derrière l'ouverture (14) et s'appliquent contre la face inférieure du couvercle (2).

2. Couvercle selon la revendication 1,
**caractérisé en ce que**
la partie de tête (5) comporte une partie centrale (17) reliant en une seule pièce la partie de tête (6) et la partie de pied (7), cette région centrale traversant l'ouverture (14) de la plaque de base (2) et dans cette région centrale, les chemins conducteurs (18) sont pratiquement perpendiculaires à la plaque de base (2).

3. Couvercle selon la revendication 2,
**caractérisé en ce que**
de façon adjacente à la zone centrale (17), au moins l'un des chemins conducteurs (18) se poursuit perpendiculairement à la plaque de base (2) à travers la zone de pied (7) de la pièce en matière plastique (5) et il sort de la zone de pied (7) de la pièce en matière plastique (5) sous l'ouverture (14) de la plaque de base (2).

4. Couvercle selon la revendication 2,
**caractérisé en ce que**
de façon adjacente à la zone centrale (17), au moins l'un des chemins conducteurs (18) continue parallèlement à la plaque de base (2) dans la zone de pied (7) de la pièce en matière plastique (5) et ensuite ce chemin conducteur sort perpendiculairement de la zone de pied (7) en étant décalé par rapport à l'ouverture (14).

5. Couvercle selon l'une des revendications 1 à 4,
**caractérisé en ce que**
la zone de pied (7) de la pièce en matière plastique (5) a une région en forme de plaque dont la face supérieure s'applique contre la face inférieure du couvercle.

6. Couvercle selon la revendication 5,
**caractérisé en ce que**
la face inférieure de la région en forme de plaque de la zone de pied (7) de la pièce en matière plastique (5) comporte des composants électriques (19, 20) reliant électriquement entre eux et à un chemin conducteur (18) sortant au moins de la zone de pied (7).

7. Couvercle selon la revendication 6,
**caractérisé en ce que**
la face inférieure de la région en forme de plaque, de la zone de pied (7) de la pièce en matière plastique (5), comporte une grille métallique plate (21) pour relier entre eux les composants électriques (19, 20) et aux chemins conducteurs (18) qui sortent.

8. Couvercle selon l'une des revendications 1 à 7,
**caractérisé par** des moyens (13) pour réaliser l'étanchéité de la fixation
de la pièce en matière plastique (5) contre la plaque de base (2).
